# EUROPEAN PATENT SPECIFICATION

(11) **EP 4 605 151 B1**
(45) Date of publication and mention of the grant of the patent: **24.12.2025**
(21) Application number: 23789998.4
(22) Date of filing: 13.10.2023
(51) Int. Cl.: B21D 5/00, B21D 5/04, B21D 43/10, B25J 9/16, G01B 11/02, G06T 7/73, G01B 11/00

(54) **APPARATUS AND METHOD FOR THE AUTOMATED BENDING OF WORKPIECES**
VORRICHTUNG UND VERFAHREN ZUM AUTOMATISIERTEN BIEGEN VON WERKSTÜCKEN
DISPOSITIF ET PROCÉDÉ DE PLIAGE AUTOMATISÉ DE PIÈCES

(30) Priority: 21.10.2022 EP 22202911
(43) Date of publication of application: 27.08.2025
(73) Proprietor: Bystronic Laser AG, 3362 Niederönz (CH)
(72) Inventor: STÄGER, Manuel, 4552 Derendingen (CH); ZWICKL, Diego, 6043 Adligenswil (CH)
(74) Representative: Fink Numrich Patentanwälte PartmbB
(86) International application number: PCT/EP2023/078488
(87) International publication number: WO 2024/083674

(56) References cited:
- WO-A1-2020/250761
- DE-A1- 102010 032 840
- DE-A1- 102017 123 877
- US-A1- 2020 023 521
- US-A1- 2021 387 301
- US-B2- 8 798 794

## Description

The invention relates to an apparatus and a method for the automated bending of workpieces.

Apparatuses for the automated bending of workpieces using a robotic device for handling the workpieces are known from the prior art. A workpiece to be handled is automatically removed from a storage by the robotic device and fed to a bending machine, which causes the workpiece to be deformed by a bending process. **In** order for the robotic device to be able to correctly remove the corresponding workpiece from the storage, image data from an image capture device are used, from which the location of the workpiece to be handled in the storage is identified. The robotic device is then suitably controlled by means of the identified location.

Document WO 2020/250761 A1 discloses an apparatus for the automated bending of workpieces, with images of a workpiece stack in a storage being photographed by a monocular camera and evaluated by means of pattern recognition. The location of the top workpiece on the workpiece stack is detected using a plurality of models.

Document WO 2021/079802 A1 describes a method for the automated bending of workpieces in which images that are photographed by a camera above the position of a workpiece are used to determine the location of the workpiece and, on this basis, a robotic device for transporting the workpiece is suitably controlled.

Conventional apparatuses for the automated bending of workpieces have the disadvantage that the image capture device which is used for detecting workpieces to be handled in a storage is arranged at a fixed position, so the field of view of the image capture device is static and only a limited spatial region of workpieces to be handled can be captured.

Document US 2020/023521 A1 discloses a method of controlling a robot system. In a calibration process, a hand camera attached to a robot hand captures an image of reference markers. Based on the captured image, calibration data between a robot coordinate system and a marker coordinate system are determined. For the normal operation of the robot, the hand camera is detached from the robot hand so that the robot hand can handle workpieces. During the normal operation, a fixed camera captures an image of a corresponding workpiece and the reference markers, and an image processing device calculates the relative position between the workpiece and the robot based on the captured image and the calibration data.

Document DE 10 2017 123 877 A1 discloses a robotic system for a shape forming machine, the robotic system comprising a manipulator for manipulating a workpiece. A camera coupled with the manipulator captures the relative position between at least one marker and the manipulator. A calculation unit connected to the camera calculates from the relative position at least one correction value for controlling the movement of the manipulator.

Document US 8 798 794 B2 discloses a method for precisely positioning at least one object in an end position in space by means of an industrial robot. The method uses a 3D image recording device comprising an angle measuring unit. The position of the object is determined based on the position of the 3D image recording device, the angular orientation of the 3D image recording device which is detected by the angle measuring unit, a 3D image recorded by the 3D image recording device and the knowledge of features on the object.

The object of the invention is to create an apparatus and a method for the automated bending of workpieces, with which workpieces to be handled can be captured in a larger spatial region.

This object is achieved by the apparatus according to claim 1 and the method according to claim 15. Further developments of the invention are defined in the dependent claims.

The apparatus according to the invention is used for the automated bending of workpieces, preferably metallic workpieces such as metal sheets. The apparatus comprises a storage for the corresponding workpieces, a robotic device for handling the workpieces and a bending machine for deforming at least some of the workpieces handled with the robotic device via a bending process. The bending machine is preferably a press brake.

The apparatus according to the invention also includes an image capture device for capturing image data about workpieces in the storage which are to be handled and a control device for controlling the robotic device using said image data.

In the apparatus according to the invention, the image capture device can be moved into different positions via an actuator system in order to capture image data from different sections of the storage which are associated with the respective positions. The actuator system can preferably be controlled via the above control device.

Furthermore, a plurality of markings are provided on the storage, the positions of which relative to a reference coordinate system are stored in the control device, i.e. the positions of the markings are already known. Preferably, the positions of the markings are three-dimensional spatial positions. If necessary, however, the positions can also be two-dimensional positions, for example if the height positions of workpieces to be handled are obtained from an information source other than the image data. The reference coordinate system is a coordinate system that is stationary in relation to the apparatus according to the invention and does not follow relative movements of components within the apparatus, such as the movements of the robotic device.

According to the invention, at least two of the plurality of markings are contained in a respective position of the image capture device in the associated storage section, and the control device is configured to carry out an evaluation of the image data of the associated storage section, in which the location of the image capture device is automatically determined using the stored positions of the markings in the associated storage section and/or the location of a workpiece to be handled relative to the reference coordinate system is automatically determined. The location of the image capture device or of the workpiece to be handled describes the position and orientation of the image capture device or of the workpiece to be handled, the position preferably being a three-dimensional spatial position and the orientation preferably being a three-dimensional spatial direction.

The markings used in the method according to the invention can be passive and/or active markings. No information about their position can be read from passive markings. For this reason, before the method according to the invention is carried out, the position of a respective passive marking relative to the reference coordinate system has been determined using a suitable measurement and stored in the control device. In contrast to this, information about their positions is stored in active markings. Before the method according to the invention is carried out, this information is read from the active markings in order to then be assigned to the reference coordinate system in the control device and stored there.

The apparatus according to the invention enables a larger field of view of a corresponding workpiece storage by positioning the image capture device in different positions. At the same time, an external calibration of the image capture device in its current position is made possible, with suitable markings on the storage being used for this purpose. The external calibration ensures that for each position of the image capture device its location in space is known. Therefore, a larger spatial region of workpieces can be captured by moving the image capture device.

In a preferred embodiment of the apparatus according to the invention, the location of a workpiece to be handled in the associated storage section relative to the reference coordinate system is determined from the location of the image capture device. This location can then be used to handle corresponding workpieces. The location of the workpiece to be handled describes its position and orientation, the position preferably being a three-dimensional spatial position and the orientation preferably being a three-dimensional spatial direction.

In a particularly preferred embodiment, the image capture device is a 3D image capture device, i.e. an image capture device with which three-dimensional image data are captured. The 3D image capture device is preferably a 3D camera device. If necessary, a 2D image capture device can also be used in the apparatus according to the invention. This is the case, for example, when the height positions of workpieces are obtained from an information source other than the image data.

In a further preferred embodiment of the apparatus according to the invention, separate storage regions for workpieces are assigned to the storage sections and a respective storage section completely covers the assigned storage region vertically in plan view. Separate storage regions are understood to be spatially disjoint storage regions. In contrast to this, the storage sections defined above with the markings contained therein do not have to be spatially disjoint. That is, a storage section can be larger than a storage region and the same markings can belong to a plurality of storage sections.

In a preferred variant of the embodiment just described, a storage region is a carrier for storing workpieces, with the carrier preferably being a pallet. Furthermore, the workpieces can preferably be stacked in the corresponding storage region.

In a further preferred embodiment of the apparatus according to the invention, the storage sections with the markings contained therein are arranged next to one another in a predetermined direction.

In a further variant, the image capture device can be moved linearly by means of the actuator system, as a result of which the position of the image capture device can be changed in a simple manner. The linear movement preferably takes place in the predetermined direction defined above, in which the storage sections are arranged next to one another.

In a further, particularly preferred embodiment of the apparatus according to the invention, all markings of the plurality of markings are arranged on the floor of the storage and/or up to 500 mm above the floor, wherein the image capture device can be moved above the storage. As a result, the capture of the markings by means of the image capture device can be ensured in a particularly reliable manner. The markings do not all have to be on the same level. Rather, the markings can be positioned in several different planes. This increases accuracy in the vertical direction.

The number of storage sections provided in the apparatus according to the invention can be chosen differently. The higher this number, the larger the spatial region in which stored workpieces can be captured. In a preferred variant, at least three storage sections, preferably 3 to 10 storage sections and particularly preferably four storage sections, are provided.

In a further preferred variant, the at least two markings in a respective storage section represent at least some of the storage sections and preferably a subset of the plurality of markings in each storage section. The markings thus differ at least in part between the storage sections.

In a further preferred variant, the at least two markings in a respective storage section are at least part of the storage sections and preferably in each storage section at least three markings, preferably four markings. The use of more than two markings improves the accuracy of position determination of the image capture device.

In a further preferred embodiment of the apparatus according to the invention, one or more markings and preferably two markings in a respective storage section belong to at least some of the storage sections and preferably in each storage section also to a storage section other than the particular storage section. At least some of the markings are thus used simultaneously for a plurality of storage sections so that the number of markings can be reduced.

In a further preferred embodiment, a respective storage section of at least some of the storage sections and preferably each storage section has a polygonal and in particular rectangular outline in vertical plan view. With such outlines, the evaluation of the image data for determining the location of the image capture device is simplified and, if necessary, enables the direct determination of the location of the workpieces to be handled. A marking is preferably provided in one or more corners and in particular in each corner of the polygonal outline.

In a further preferred embodiment, the markings are designed to be optically different in order to be distinguishable by the control device. They preferably contain an optical code. As a result, the evaluation of the image data can be simplified and the accuracy of position determination of the image capture device can be improved. The optically different markings can, for example, have different colours. If the markings contain an optical code, it is preferably a binary code that can be processed very easily in the control device of the apparatus according to the invention.

In a further preferred variant, a respective marking comprises at least some of the plurality of markings and in particular each marking comprises at least two circle segments with a common segment centre. Using such markings, their position can be extracted very precisely from the image data and compared with the positions stored in the control device. As a result, the accuracy of position determination of the image capture device can be further improved.

The invention also relates to a method for the automated bending of workpieces with the apparatus according to the invention or one or more preferred variants of this apparatus. In other words, an apparatus according to the invention is used in the method, which comprises a storage for workpieces, a robotic device for handling the workpieces and a bending machine for deforming at least some of the workpieces handled with the robotic device via a bending process, the apparatus also comprising an image capture device for capturing image data about workpieces in the storage which are to be handled and a control device for controlling the robotic device using the image data.

As part of the method according to the invention, the image capture device is moved into different positions via an actuator system, which is preferably controlled via the above control device, in order to capture image data from different sections of the storage which are associated with the respective positions, with a plurality of markings being provided on the storage, the positions of which relative to a reference coordinate system are stored in the control device, wherein at least two markings of the plurality of markings are contained in a respective position of the image capture device in the associated storage section. In addition, the control device in the method according to the invention carries out an evaluation of the image data of the associated storage section, in which the location of the image capture device is determined relative to the reference coordinate system using the stored positions of the markings in the associated storage section.

All of the additional statements made above in connection with the explanation of the apparatus according to the invention can also be applied to the method according to the invention. In particular, the location of the image capture device describes its position and orientation, the position preferably being a three-dimensional spatial position and the orientation preferably being a three-dimensional spatial direction. Furthermore, the location of a workpiece to be handled in the associated storage section relative to the reference coordinate system is preferably determined from the location of the image capture device. This location can then be used to handle corresponding workpieces. The location of the workpiece to be handled describes its position and orientation, the position preferably being a three-dimensional spatial position and the orientation preferably being a three-dimensional spatial direction.

Exemplary embodiments of the invention are described in detail below with reference to the accompanying figures.

### In the drawings:

- Fig. 1: shows a schematic representation of the structure of a variant of an apparatus according to the invention;
- Fig. 2: shows a schematic side view of a storage for workpieces with an image capture device arranged above it according to a preferred embodiment of the apparatus according to the invention;
- Fig. 3: shows a plan view of the storage from Figure 2; and
- Fig. 4: shows a flow chart illustrating the steps performed by an embodiment of the apparatus according to the invention.

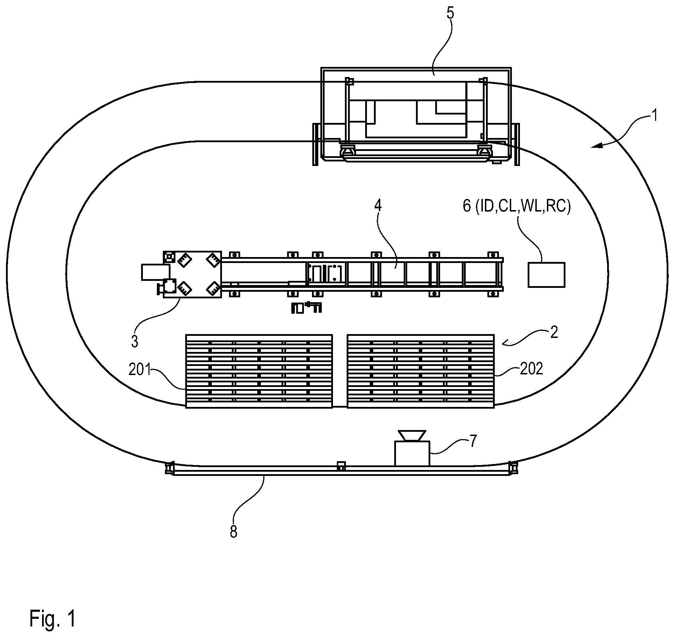

Figure 1 shows a schematic view of an embodiment of an apparatus according to the invention for the automated bending of workpieces. The apparatus is denoted by reference sign 1 and comprises, in a manner known per se, a storage 2 which, in the embodiment shown, contains two storage sections 201 and 202. Corresponding pallets are provided in the storage sections, on which pallets the workpieces to be handled, in the form of metal sheets, can be stacked. Above the storage 2 is a movable image capture device 7 in the form of a 3D camera, which can be moved along a linear suspension by means of an actuator system 8. In other words, the suspension contains a corresponding actuator system 8, which enables the movement of the image capture device 7 along the suspension.

A robotic device 3, which can be moved along a guide 4, is provided for the automatic handling of corresponding workpieces in the storage 2. The robotic device 3, shown here only schematically, can automatically remove workpieces from the storage via an articulated assembly (not shown), for example by means of a gripper or via suction cups. A removed workpiece is then transported by the robotic device 3 to a bending machine 5 known per se, which in turn is indicated only schematically in Figure 1. The robotic device 3 feeds the workpiece to be handled to the bending machine 5, which causes the deformation of the workpiece by exerting force on it via bending beams. The workpiece can then be placed in a corresponding storage for deformed workpieces, wherein this storage can also be contained in the storage 2.

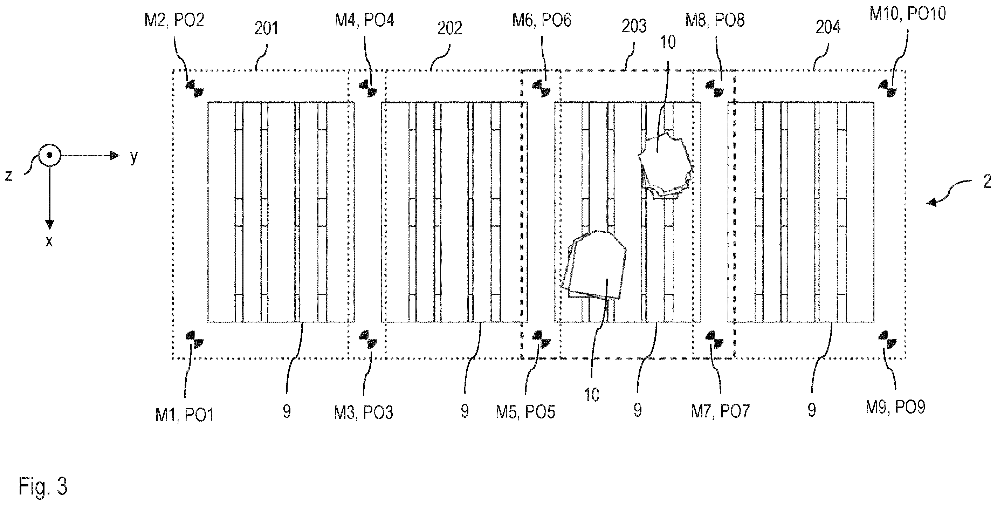

In order to ensure the automatic handling of the workpieces by the robotic device 3, a control device 6 is provided, which evaluates image data ID captured with the image capture device 7. It should be noted here that a plurality of markings with already known three-dimensional positions are provided within the storage 2, the markings with their already known positions being taken into account when the image data ID are processed by the control device 6. For reasons of clarity, the markings cannot be seen in the schematic representation of Figure 1. However, the markings result from the embodiment of an apparatus according to the invention described further below (see in particular Figure 3).

By evaluating the image data ID with the markings contained therein, the current three-dimensional location CL of the image capture device 7 in relation to a stationary reference coordinate system RC can be determined by comparing the markings contained in the image data with their already known positions. Methods known per se can be used for this. In this way, external calibration can be carried out for any positions of the image capture device 7. With the determined position CL of the image capture device 7, the three-dimensional position WL of a corresponding workpiece to be gripped by the robotic device 3 in the stationary reference coordinate system RC can then be determined again using known methods by further evaluation of the captured image data ID. Using this position information, the robotic device 3 can be suitably controlled with the control device 6 in order to remove the corresponding workpiece from the storage 2 and feed it to the bending machine 5 in order to carry out its deformation.

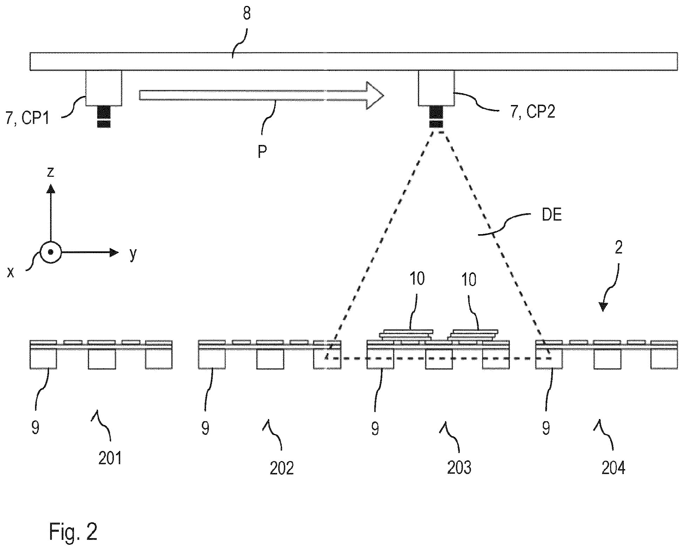

Figure 2 shows a side view of a storage 2 in a variant of an apparatus according to the invention. In contrast to the apparatus in Figure 1, the storage 2 contains a total of four storage sections 201, 202, 203 and 204. According to the Cartesian coordinate system of x, y and z axes shown in Figure 2, which is also reproduced in Figure 3 described below, the storage sections are arranged next to one another in the y direction of the coordinate system. Each storage section includes a corresponding storage region 9 in the form of a pallet on which corresponding workpieces 10, in the form of metal sheets, can be stacked. As an example, two stacks of workpieces 10 are indicated for the third storage region from the left.

In the vertical direction (i.e. in the z direction of the coordinate system shown) above the storage 2 is the linear actuator system 8 already mentioned above, with which the image capture device 7 can be moved linearly in the y direction. The direction of movement of the image capture device is indicated by the arrow P. In Figure 2, the image capture device 7 is at position CP1 above the left pallet, whereas at the position CP2 it is above the third palette from the left. The detection region DE of the image capture device 7 is indicated as an example for the position CP2. The planar coverage of the detection region in a vertical plan view correlates with the corresponding storage sections 201 to 204, as can be seen from Figure 3 described further below.

According to Figure 2, workpieces 10 can be captured for each of the storage sections 201 to 204 by appropriately positioning the image capture device 7 above the respective storage sections. It is thus possible to handle workpieces in a region that is extensive in the y direction using corresponding image data of the storage sections by means of the robotic device 3.

Figure 3 again shows the four storage sections 201, 202, 203 and 204 in a plan view from above. As can be seen, the storage sections have a rectangular outline. The storage section 203 corresponding to the plan view of the detection region DE from Figure 2 is indicated with dashed lines. The other storage sections are represented by dotted lines. Each storage section correlates with a position of the image capture device 7 centrally above the corresponding storage section. As can be seen clearly from Figure 3, each of the storage sections 201 to 204 contains a storage region 9 in the form of a rectangular pallet, with each pallet being uniquely assigned to a storage section. In addition, markings M1, M2, ..., M10 with already known three-dimensional spatial positions PO1, PO2, ..., PO10 are provided in the corners of the storage sections 201 to 204. The markings and their positions are stored in the control device 6 as digital data.

Each of the markings M1 to M10 is formed by two opposing black circle segments with a common centre. This optical structure enables a very precise identification of the markings within the image data ID captured by the image capture device 7. Each of the storage sections 201 to 204 includes four markings in the corners of its rectangular outline. The storage sections overlap with one another, such that two markings for each storage section also belong to an adjacent storage section. Specifically, the storage section 201 includes markings M1, M2, M3, and M4. The storage section 202 includes markings M3, M4, M5 and M6, with markings M3 and M4 also belonging to storage section 201. Storage section 203 includes markings M5, M6, M7 and M8, with markings M5 and M6 also belonging to storage section 202. Storage section 204 includes markings M7, M8, M9 and M10, with markings M7 and M8 also belonging to storage section 203.

In order to handle a workpiece in the storage section 203, for example, the image capture device 7 moves into the position CP2 shown in Figure 2 by means of the linear actuator system 8. Image data ID are then captured via the image capture device 7. Said image data include the markings M5, M6, M7, and M8. By comparing the already known positions of the markings with their positions in the image data, the exact three-dimensional location of the image capture device 7 in its position CP2 can be determined in a manner known per se. In other words, an external calibration of the image capture device 7 can be carried out instantaneously. By means of this external calibration, i.e. using the position of the image capture device 7, the three-dimensional location of a workpiece to be handled on the upper side of a corresponding stack can then be determined with the control device 6 by an evaluation of the image data ID which is known per se, and the robotic device for handling the workpiece can be suitably controlled.

In the embodiment described here, the number of markings can be kept low, since a plurality of markings are used simultaneously for adjacent storage sections. Furthermore, the shape of the markings ensures their highly precise identification in the image data ID and thereby improves the location determination of the image capture device 7.

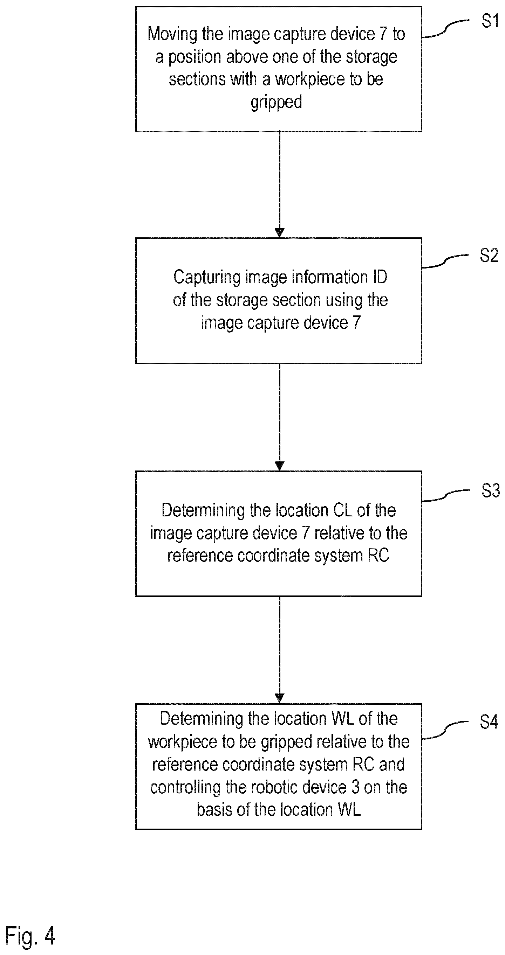

Figure 4 again illustrates the essential steps that are carried out by the apparatus described above in connection with the automated bending of a workpiece. According to step S1, the image capture device 7 is first moved into the position of that storage section in which a workpiece is to be gripped with the robotic device 3 (e.g. position CP2 in Figure 2). In step S2, three-dimensional image information ID of the storage section is then captured with the image capture device 7. In addition to the workpiece to be gripped, this image information also contains the corresponding four markings. If the image capture device 7 is in the position CP2, these are the markings M5, M6, M7 and M8. The three-dimensional location CL of the image capture device 7 relative to the above-mentioned stationary reference coordinate system RC is then determined in step S3 using a method known per se. This step thus achieves an external calibration of the image capture device in the associated position.

Finally, in step S4, the three-dimensional location WL of the workpiece to be gripped relative to the reference coordinate system RC is determined using the three-dimensional location CL of the image capture device 7, and the robotic device 3 is controlled on the basis of the location WL. In other words, the robotic device moves into the storage 2 by means of its articulated assembly and removes the workpiece to be gripped from the corresponding stack, for example via suction cups. The robotic device 3 then feeds the removed workpiece to the bending machine 5 in order to carry out the bending process.

The embodiments of the invention described above have a number of advantages. In particular, a movable image capture device makes it possible to significantly broaden the field of view of stored workpieces so that, within the context of the automated handling of workpieces, a storage for the workpieces that is significantly larger in area can be used without having to use a plurality of image capture devices. In this way, it is also ensured that after the image capture device has been moved, it is correctly calibrated, which is achieved by means of external calibration via suitable markings.

The markings can be designed differently depending on the embodiment. It is crucial that they can be identified in the corresponding image data from the image capture device. The markings do not necessarily have to be distinguishable from one another. Nevertheless, the markings can also be designed in such a way that they can be distinguished from one another optically, which can be achieved, for example, by means of optical coding. In a preferred embodiment, markings are used simultaneously by different storage sections so that their number can be reduced.

### List of reference signs

1 Apparatus for the automated bending of workpieces
2 Storage
201, 202, 203, 204 Storage sections
3 Robotic device
4 Guide
5 Bending machine
6 Control device
7 Image capture device (camera)
8 Actuator system
9 Storage regions (carriers)
10 Workpieces (metal sheets)
RC Reference coordinate system
ID Image data
CL Location of the image capture device
WL Location of the workpiece to be handled/gripped
CP1, CP2 Positions (camera positions)
DE Detection region of the image capture device
P Predetermined direction (direction of movement of the image capture device)
M1, M2, ..., M10 Markings (passive or active)
PO1, PO2, ..., PO10 Positions of markings
S1, S2, S3, S4 Steps

## Claims

1. An apparatus for the automated bending of workpieces (10), comprising a storage (2) for workpieces (10), a robotic device (3) for handling the workpieces (10) and a bending machine (5) for deforming at least some of the workpieces (10) handled with the robotic device (3) via a bending process, wherein the apparatus (1) also has an image capture device (7) for capturing image data (ID) about workpieces (10) in the storage (2) which are to be handled and a control device (6) for controlling the robotic device (3) using the image data (ID),
**characterised in that**
the image capture device (7) can be moved into different positions (CP1, CP2) via an actuator system (8) in order to capture image data (ID) from different storage sections (201, 202, 203, 204) of the storage (2) associated with the respective positions (CP1, CP2), wherein a plurality of markings (M1, M2, ..., M10) are provided on the storage (2), the positions (PO1, PO2, ..., PO10) of which markings relative to a reference coordinate system (RC) are stored in the control device (6), wherein a position (CP1, CP2) of the image capture device (7) in the associated storage section (201, 202, 203, 204) contains at least two markings (M1, M2, ..., M10) of the plurality of markings (M1, M2, ..., M10) and the control device (6) is configured to carry out an evaluation of the image data (ID) of the associated storage section (201, 202, 203, 204), in which, by means of the stored positions (PO1, PO2, ..., PO10) of the markings (M1, M2, ..., M10) in the associated storage section (201, 202, 203, 204), the location (CL) of the image capture device (7) and/or the location (WL) of a workpiece (10) to be handled relative to the reference coordinate system (RC) is automatically determined.

2. The apparatus according to claim 1, **characterised in that** the image capture device (7) is a 3D image capture device, preferably a 3D camera device, for capturing three-dimensional image data (ID).

3. The apparatus according to claim 1 or 2, **characterised in that** separate storage regions (9) for workpieces (10) are assigned to the storage sections (201, 202, 203, 204), and a respective storage section (201, 202, 203, 204) completely covers the assigned storage region (9) in vertical plan view, wherein a respective storage region (9) is preferably a carrier for storing workpieces (10).

4. The apparatus according to any one of the preceding claims, **characterised in that** the storage sections (201, 202, ..., 204) are arranged next to one another in a predetermined direction (P).

5. The apparatus according to any one of the preceding claims, **characterised in that** the image capture device (7) can be moved linearly by means of the actuator system (8).

6. The apparatus according to any one of the preceding claims, **characterised in that** all markings (M1, M2, ..., M10) of the plurality of markings (M1, M2, ..., M10) are arranged on the floor of the storage (2) and/or up to 500 mm above the floor and the image capture device (7) can be moved above the storage (2).

7. The apparatus according to any one of the preceding claims, **characterised in that** at least three storage sections (201, 202, 203, 204), preferably between 3 and 10 storage sections (201, 202, 203, 204) and particularly preferably four storage sections (201, 202, 203, 204) are provided.

8. The apparatus according to any one of the preceding claims, **characterised in that** the at least two markings (M1, M2, ..., M10) in a respective storage section (201, 202, 203, 204) of at least some of the storage sections (201, 202, 203, 204) and preferably in each storage section (201, 202, 203, 204) represent a subset of the plurality of markings (201, 202, 203, 204).

9. The apparatus according to any one of the preceding claims, **characterised in that** the at least two markings (M1, M2, ..., M10) in a respective storage section (201, 202, 203, 204) of at least some of the storage sections (201, 202, 203, 204) and preferably in each storage section (201, 202, 203, 204) are at least three markings (M1, M2, ..., M10), preferably at least four markings (M1, M2, ..., M10).

10. The apparatus according to any one of the preceding claims, **characterised in that** one or more markings (M1, M2, ..., M10) and preferably two markings (M1, M2, ..., M10) in a respective storage section (201, 202, 203, 204) of at least some of the storage sections (201, 202, 203, 204) and preferably in each storage section (201, 202, 203, 204) also belong to a storage section (201, 202, 203, 204) other than the respective storage section (201, 202, 203, 204).

11. The apparatus according to any one of the preceding claims, **characterised in that** a respective storage section (201, 202, 203, 204) of at least some of the storage sections (201, 202, 203, 204) and preferably each storage section (201, 202, 203, 204) has a polygonal and in particular rectangular outline in vertical plan view.

12. The apparatus according to claim 11, **characterised in that** a marking (M1, M2, ..., M10) is provided in one or more corners and preferably in each corner of the polygonal outline.

13. The apparatus according to any one of the preceding claims, **characterised in that** the markings (M1, M2, ..., M10) are designed to be optically different in order to be distinguishable by the control device (6) and in particular contain an optical code.

14. The apparatus according to any one of the preceding claims, **characterised in that** a respective marking (M1, M2, ..., M10) of at least some of the plurality of markings (M1, M2, ..., M10) and in particular each marking (M1, M2, ..., M10) comprises at least two circle segments having a common segment centre.

15. A method for the automated bending of workpieces with an apparatus (1) according to any one of the preceding claims,
**characterised in that**
the image capture device (7) is moved into different positions (CP1, CP2) via the actuator system (8) in order to capture the image data (ID) from the different storage sections (201, 202, 203, 204) of the storage (2) associated with the respective positions (CP1, CP2),
the control device (6) carries out the evaluation of the image data (ID) of the associated storage section (201, 202, 203, 204).

## Patentansprüche

1. Vorrichtung zum automatisierten Biegen von Werkstücken (10), umfassend ein Lager (2) für Werkstücke (10), eine Robotervorrichtung (3) zum Handhaben der Werkstücke (10) und eine Biegemaschine (5) zum Verformen zumindest einiger der mit der Robotervorrichtung (3) gehandhabten Werkstücke (10) durch einen Biegevorgang, wobei die Vorrichtung (1) außerdem eine Bilderfassungsvorrichtung (7) zum Erfassen von Bilddaten (ID) über zu handhabende Werkstücke (10) im Lager (2) und eine Steuervorrichtung (6) zum Steuern der Robotervorrichtung (3) unter Verwendung der Bilddaten (ID) aufweist,
**dadurch gekennzeichnet, dass**
die Bilderfassungsvorrichtung (7) über ein Aktuatorsystem (8) in unterschiedliche Positionen (CP1, CP2) bewegt werden kann, um Bilddaten (ID) aus unterschiedlichen, den jeweiligen Positionen (CP1, CP2) zugeordneten Lagerabschnitten (201, 202, 203, 204) des Lagers (2) zu erfassen, wobei an dem Lager (2) eine Vielzahl von Markierungen (M1, M2, ..., M10) vorgesehen sind, wobei die Positionen (PO1, PO2, ..., PO10) der Markierungen in Bezug auf ein Referenzkoordinatensystem (RC) in der Steuervorrichtung (6) gespeichert sind, wobei eine Position (CP1, CP2) der Bilderfassungsvorrichtung (7) in dem zugeordneten Lagerabschnitt (201, 202, 203, 204) mindestens zwei Markierungen (M1, M2, ..., M10) der Vielzahl von Markierungen (M1, M2, ..., M10) enthält und die Steuervorrichtung (6) dazu konfiguriert ist, eine Auswertung der Bilddaten (ID) des zugeordneten Lagerabschnitts (201, 202, 203, 204) durchzuführen, durch die mittels der gespeicherten Positionen (PO1, PO2, ..., PO10) der Markierungen (M1, M2, ..., M10) in dem zugeordneten Lagerabschnitt (201, 202, 203, 204) der Standort (CL) der Bilderfassungsvorrichtung (7) und/oder der Standort (WL) eines zu handhabenden Werkstücks (10) in Bezug auf das Referenzkoordinatensystem (RC) automatisch bestimmt wird.

2. Vorrichtung nach Anspruch 1, **dadurch gekennzeichnet, dass** die Bilderfassungsvorrichtung (7) eine 3D-Bilderfassungsvorrichtung, vorzugsweise eine 3D-Kameravorrichtung, zur Erfassung dreidimensionaler Bilddaten (ID) ist.

3. Vorrichtung nach Anspruch 1 oder 2, **dadurch gekennzeichnet, dass** den Lagerabschnitten (201, 202, 203, 204) separate Lagerbereiche (9) für Werkstücke (10) zugewiesen sind und ein jeweiliger Lagerabschnitt (201, 202, 203, 204) den zugewiesenen Lagerbereich (9) in vertikaler Draufsicht vollständig bedeckt, wobei ein jeweiliger Lagerbereich (9) vorzugsweise ein Träger zur Lagerung von Werkstücken (10) ist.

4. Vorrichtung nach einem der vorhergehenden Ansprüche, **dadurch gekennzeichnet, dass** die Lagerabschnitte (201, 202, ..., 204) in einer vorbestimmten Richtung (P) nebeneinander angeordnet sind.

5. Vorrichtung nach einem der vorhergehenden Ansprüche, **dadurch gekennzeichnet, dass** die Bilderfassungsvorrichtung (7) mittels des Aktuatorsystems (8) linear bewegt werden kann.

6. Vorrichtung nach einem der vorhergehenden Ansprüche, **dadurch gekennzeichnet, dass** alle Markierungen (M1, M2, ..., M10) der Vielzahl von Markierungen (M1, M2, ..., M10) auf dem Boden des Lagers (2) und/oder bis zu 500 mm über dem Boden angeordnet sind und die Bilderfassungsvorrichtung (7) über dem Lager (2) bewegt werden kann.

7. Vorrichtung nach einem der vorhergehenden Ansprüche, **dadurch gekennzeichnet, dass** mindestens drei Lagerabschnitte (201, 202, 203, 204), vorzugsweise zwischen 3 und 10 Lagerabschnitte (201, 202, 203, 204) und besonders bevorzugt vier Lagerabschnitte (201, 202, 203, 204), vorgesehen sind.

8. Vorrichtung nach einem der vorhergehenden Ansprüche, **dadurch gekennzeichnet, dass** die mindestens zwei Markierungen (M1, M2, ..., M10) in einem jeweiligen Lagerabschnitt (201, 202, 203, 204) zumindest einiger der Lagerabschnitte (201, 202, 203, 204) und vorzugsweise in jedem Lagerabschnitt (201, 202, 203, 204) eine Teilmenge der Vielzahl von Markierungen (201, 202, 203, 204) darstellen.

9. Vorrichtung nach einem der vorhergehenden Ansprüche, **dadurch gekennzeichnet, dass** die mindestens zwei Markierungen (M1, M2, ..., M10) in einem jeweiligen Lagerabschnitt (201, 202, 203, 204) zumindest einiger der Lagerabschnitte (201, 202, 203, 204) und vorzugsweise in jedem Lagerabschnitt (201, 202, 203, 204) mindestens drei Markierungen (M1, M2, ..., M10), vorzugsweise mindestens vier Markierungen (M1, M2, ..., M10), sind.

10. Vorrichtung nach einem der vorhergehenden Ansprüche, **dadurch gekennzeichnet, dass** eine oder mehrere Markierungen (M1, M2, ..., M10) und vorzugsweise zwei Markierungen (M1, M2, ..., M10) in einem jeweiligen Lagerabschnitt (201, 202, 203, 204) zumindest einiger der Lagerabschnitte (201, 202, 203, 204) und vorzugsweise in jedem Lagerabschnitt (201, 202, 203, 204) auch zu einem anderen Lagerabschnitt (201, 202, 203, 204) als dem jeweiligen Lagerabschnitt (201, 202, 203, 204) gehören.

11. Vorrichtung nach einem der vorhergehenden Ansprüche, **dadurch gekennzeichnet, dass** ein jeweiliger Lagerabschnitt (201, 202, 203, 204) zumindest einiger der Lagerabschnitte (201, 202, 203, 204) und vorzugsweise jeder Lagerabschnitt (201, 202, 203, 204) in vertikaler Draufsicht einen polygonalen und insbesondere rechteckigen Grundriss aufweist.

12. Vorrichtung nach Anspruch 11, **dadurch gekennzeichnet, dass** eine Markierung (M1, M2, ..., M10) in einer oder mehreren Ecken, vorzugsweise in jeder Ecke, des polygonalen Grundrisses vorgesehen ist.

13. Vorrichtung nach einem der vorhergehenden Ansprüche, **dadurch gekennzeichnet, dass** die Markierungen (M1, M2, ..., M10) zur Unterscheidung durch die Steuervorrichtung (6) optisch unterschiedlich ausgestaltet sind und insbesondere einen optischen Code enthalten.

14. Vorrichtung nach einem der vorhergehenden Ansprüche, **dadurch gekennzeichnet, dass** eine jeweilige Markierung (M1, M2, ..., M10) zumindest einiger der Vielzahl von Markierungen (M1, M2, ..., M10) und insbesondere jede Markierung (M1, M2, ..., M10) mindestens zwei Kreissegmente mit einem gemeinsamen Segmentmittelpunkt umfasst.

15. Verfahren zum automatisierten Biegen von Werkstücken mit einer Vorrichtung (1) nach einem der vorhergehenden Ansprüche,
**dadurch gekennzeichnet, dass**
die Bilderfassungsvorrichtung (7) über das Aktuatorsystem (8) in unterschiedliche Positionen (CP1, CP2) bewegt wird, um die Bilddaten (ID) aus unterschiedlichen, den jeweiligen Positionen (CP1, CP2) zugeordneten Lagerabschnitten (201, 202, 203, 204) des Lagers (2) zu erfassen,
die Steuervorrichtung (6) die Auswertung der Bilddaten (ID) des zugeordneten Lagerabschnitts (201, 202, 203, 204) durchführt.

## Revendications

1. Appareil de pliage automatisé de pièces (10), comprenant un magasin (2) pour les pièces (10), un dispositif robotisé (3) pour la manipulation des pièces (10) et une machine à plier (5) pour la déformation d'au moins une partie des pièces (10) manipulées par le dispositif robotisé (3) au moyen d'un processus de pliage, l'appareil (1) comprenant également un dispositif de capture d'images (7) pour la capture de données d'image (ID) relatives aux pièces (10) à manipuler dans le magasin (2) et un dispositif de commande (6) pour la commande du dispositif robotisé (3) à l'aide des données d'image (ID),
**caractérisé en ce que**
le dispositif de capture d'images (7) peut être déplacé dans différentes positions (CP1, CP2) par l'intermédiaire d'un système d'actionneurs (8) afin de capturer des données d'image (ID) provenant de différentes sections de stockage (201, 202, 203, 204) du magasin (2) associées aux positions (CP1, CP2) respectives, dans lequel une pluralité de repères (M1, M2, ..., M10) sont prévus sur le magasin (2), dont les positions (PO1, PO2, ..., PO10) par rapport à un système de coordonnées de référence (RC) sont enregistrées dans le dispositif de commande (6), dans lequel une position (CP1, CP2) du dispositif de capture d'images (7) dans la section de stockage (201, 202, 203, 204) associée contient au moins deux repères (M1, M2, ..., M10) parmi la pluralité de repères (M1, M2, ..., M10) et le dispositif de commande (6) est configuré pour effectuer une évaluation des données d'image (ID) de la section de stockage (201, 202, 203, 204) associée, dans laquelle, au moyen des positions (PO1, PO2, ..., PO10) stockées des repères (M1, M2, ..., M10) dans la section de stockage (201, 202, 203, 204) associée, l'emplacement (CL) du dispositif de capture d'images (7) et/ou l'emplacement (WL) d'une pièce (10) à manipuler par rapport au système de coordonnées de référence (RC) sont automatiquement déterminés.

2. Appareil selon la revendication 1, **caractérisé en ce que** le dispositif de capture d'images (7) est un dispositif de capture d'images 3D, de préférence un dispositif de caméra 3D, pour capturer des données d'image (ID) tridimensionnelles.

3. Appareil selon la revendication 1 ou 2, **caractérisé en ce que** des zones de stockage (9) séparées pour les pièces (10) sont attribuées aux sections de stockage (201, 202, 203, 204) et une section de stockage (201, 202, 203, 204) respective recouvre complètement la zone de stockage (9) attribuée dans une vue en plan vertical, dans lequel une zone de stockage (9) respective est de préférence un support pour stocker les pièces (10).

4. Appareil selon l'une quelconque des revendications précédentes, **caractérisé en ce que** les sections de stockage (201, 202, ..., 204) sont disposées les unes à côté des autres dans une direction (P) prédéterminée.

5. Appareil selon l'une quelconque des revendications précédentes, **caractérisé en ce que** le dispositif de capture d'images (7) peut être déplacé linéairement au moyen du système d'actionneurs (8).

6. Appareil selon l'une quelconque des revendications précédentes, **caractérisé en ce que** tous les repères (M1, M2, ..., M10) de la pluralité de repères (M1, M2, ..., M10) sont disposés sur le sol du magasin (2) et/ou jusqu'à 500 mm au-dessus du sol et le dispositif de capture d'images (7) peut être déplacé au-dessus du magasin (2).

7. Appareil selon l'une quelconque des revendications précédentes, **caractérisé en ce qu'**il est prévu au moins trois sections de stockage (201, 202, 203, 204), de préférence entre 3 et 10 sections de stockage (201, 202, 203, 204) et de manière particulièrement préférée quatre sections de stockage (201, 202, 203, 204).

8. Appareil selon l'une quelconque des revendications précédentes, **caractérisé en ce que** les au moins deux repères (M1, M2, ..., M10) dans une section de stockage (201, 202, 203, 204) respective d'au moins une partie des sections de stockage (201, 202, 203, 204) et de préférence dans chaque section de stockage (201, 202, 203, 204) représentent un sous-ensemble de la pluralité de repères (201, 202, 203, 204).

9. Appareil selon l'une quelconque des revendications précédentes, **caractérisé en ce que** les au moins deux repères (M1, M2, ..., M10) dans une section de stockage (201, 202, 203, 204) respective d'au moins une partie des sections de stockage (201, 202, 203, 204) et de préférence dans chaque section de stockage (201, 202, 203, 204) sont au moins trois repères (M1, M2, ..., M10), de préférence au moins quatre repères (M1, M2, ..., M10).

10. Appareil selon l'une quelconque des revendications précédentes, **caractérisé en ce qu'**un ou plusieurs repères (M1, M2, ..., M10) et de préférence deux repères (M1, M2, ..., M10) dans une section de stockage (201, 202, 203, 204) respective d'au moins une partie des sections de stockage (201, 202, 203, 204) et de préférence dans chaque section de stockage (201, 202, 203, 204) appartiennent également à une section de stockage (201, 202, 203, 204) autre que la section de stockage (201, 202, 203, 204) respective.

11. Appareil selon l'une quelconque des revendications précédentes, **caractérisé en ce qu'**une section de stockage (201, 202, 203, 204) respective d'au moins une partie des sections de stockage (201, 202, 203, 204) et de préférence chaque section de stockage (201, 202, 203, 204) présente un contour polygonal et en particulier rectangulaire en vue en plan vertical.

12. Appareil selon la revendication 11, **caractérisé en ce qu'**un repère (M1, M2, ..., M10) est prévu dans un ou plusieurs coins et de préférence dans chaque coin du contour polygonal.

13. Appareil selon l'une quelconque des revendications précédentes, **caractérisé en ce que** les repères (M1, M2, ..., M10) sont conçus de manière à être optiquement différents afin de pouvoir être distingués par le dispositif de commande (6) et contiennent en particulier un code optique.

14. Appareil selon l'une quelconque des revendications précédentes, **caractérisé en ce qu'**un repère (M1, M2, ..., M10) respectif d'au moins une partie de la pluralité de repères (M1, M2, ..., M10) et en particulier chaque repère (M1, M2, ..., M10) comprend au moins deux segments de cercle ayant un centre de segment commun.

15. Procédé permettant 1e pliage automatisé de pièces au moyen d'un appareil (1) selon l'une quelconque des revendications précédentes,
**caractérisé en ce que**
le dispositif de capture d'images (7) est déplacé dans différentes positions (CP1, CP2) par l'intermédiaire du système d'actionneurs (8) afin de capturer les données d'image (ID) à partir des différentes sections de stockage (201, 202, 203, 204) du magasin (2) associées aux positions (CP1, CP2) respectives,
le dispositif de commande (6) effectue l'évaluation des données d'image (ID) de la section de stockage (201, 202, 203, 204) associée.
